Europäisches Patentamt

European Patent Office

Office européen des brevets

(19)

(11) Publication number: **0 042 823**
**B1**

## EUROPEAN PATENT SPECIFICATION

(45) Date of publication of patent specification: **16.05.84**

(51) Int. Cl.³: **A 01 D 63/00**

(21) Application number: **81830089.9**

(22) Date of filing: **02.06.81**

(54) Cutting device with vertical blades for agricultural machines, particularly for mowing-conditioning machines.

(30) Priority: **19.06.80 IT 5332280 u**

(43) Date of publication of application:
**30.12.81 Bulletin 81/52**

(45) Publication of the grant of the patent:
**16.05.84 Bulletin 84/20**

(84) Designated Contracting States:
**BE DE FR GB IT NL SE**

(56) References cited:
**FR-A- 749 227**
**FR-A-2 182 293**
**US-A-1 445 515**
**US-A-2 154 588**
**US-A-2 521 999**
**US-A-2 903 838**
**US-A-3 126 968**
**US-A-3 628 317**

(73) Proprietor: **PIETRO LAVERDA S.p.A.**
**I-36042 Breganze (Vicenza) (IT)**

(72) Inventor: **Raineri, Giuseppe**
**Via Bellini 20/22**
**I-36061 Bassano del Grappa (Vicenza) (IT)**

(74) Representative: **Jacobacci, Filippo et al**
**c/o JACOBACCI-CASETTA & PERANI S.n.c. Via Alfieri, 17**
**I-10121 Torino (IT)**

Courier Press, Leamington Spa, England.

## Description

The present invention relates to a cutting device with vertical blades for agricultural machines, particularly for mowing-conditioning machines.

Agricultural machines are already in use which are provided at their front ends with horizontal cutter bar and two vertical dividing walls disposed at the sides of the horizontal cutting bar, at least one of the walls having a cutting device with vertical blades which allows the crop being mown by the machine to be divided cleanly from the crop yet to be mown which is located beside the machine itself (see for example US—A—2 521 999 and FR—A—2 182 293).

The cutting device with vertical blades which is used in machines of this type has the same construction as a mowing bar of conventional type. It includes, therefore, a series of blade segments fixed to a bar which oscillates vertically, and means for guiding the movement of the bar, constituted, for example, by a series of fingers and guide plates.

The moving bar with the vertical blades is driven by means of a linkage connected to the bar through a bell-crank lever.

In conclusion, the structure of this device is relatively complex, heavy and expensive.

It is also known from FR—A—2 182 293 to use a vertical cutter in an operator-propelled lawn edge trimmer, having a movable blade oscillating around an articulation axis relative to a fixed blade. However, the device illustrated in such reference has a structure and an arrangement not adapted for use in an agricultural machine such as a mowing-conditioning machine.

The object of the present invention is to provide a cutting device with vertical blades of the type specified above which has a simple structure, is lighter in weight and is less costly to produce.

In order to achieve this object, the invention provides a cutting device with vertical blades of the type specified above, characterised in that it includes:

— a first vertical plate which is fixed at the front and to one side of the agricultural machine, and having a front edge in the form of an arc of a circle;
— a first series of blade segments fixed along the front edge of the first plate;
— a second vertical plate articulated to the side of the agricultural machine alongside the first plate about a horizontal axis which is perpendicular to said plates and passes through the centre of the circle of said arc, the second plate having a front edge which is also in the form of an arc of a circle having its centre and radius coincident with those of the arc of the first plate;
— a second series of blade segments fixed along the front edge of the second plate; and
— mechanical transmission means for oscillating the second plate relative to the first plate about the articulation axis, said means comprising a crank including an eccentric pin carried by a cap-shaped body fixed to one end of a rotating shaft of the agricultural machine, and a connecting rod which is articulated at its ends respectively with interposition of rolling bearings to the crank and to the second plate, said second plate being provided with a stiffening rib extending between said articulation axis of the second plate relative to the first plate and the articulation axis of the second plate to said connecting rod.

The invention will now be described with reference to the appended drawings, provided purely by way of non-limiting example, in which:

Figure 1 is a side-elevational view of the front part of a mowing-conditioning machine provided with a device according to the invention;

Figure 2 is a partially-sectioned plan view of the apparatus illustrated in Figure 1; and

Figures 3 and 4 illustrate two details of Figure 2 in section and on an enlarged scale.

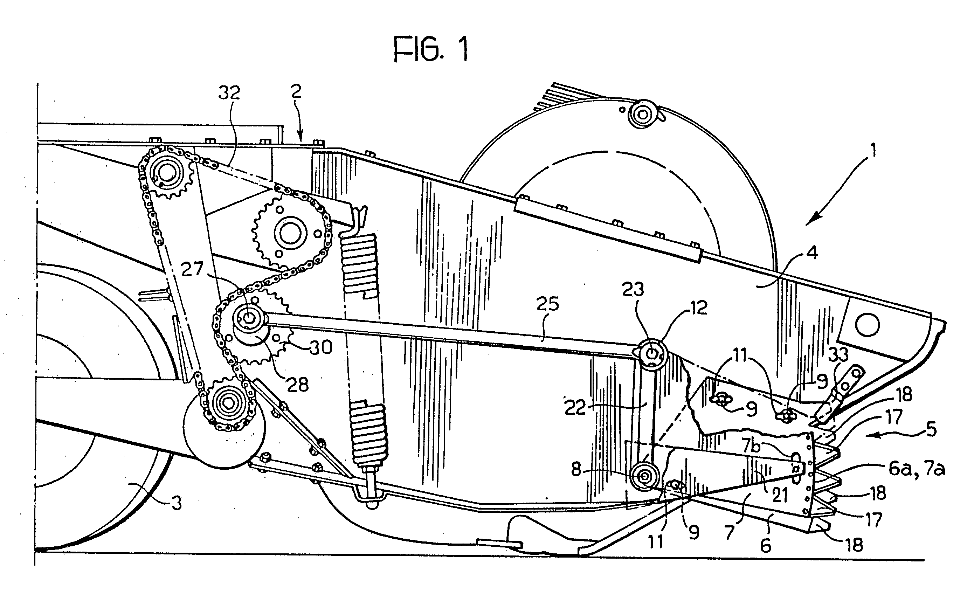

In the drawings, by 1 is indicated generally the front part of a mowing-conditioning machine of towable type, which has a frame 2 mounted on wheels 3, and two dividing walls 4 (one of which is illustrated in Figure 1) at its sides for dividing the crop being mown from the crop disposed beside the machine.

One of the walls 4 is provided with a cutting device with vertical blades, generally indicated 5, which includes a pair of plates 6, 7.

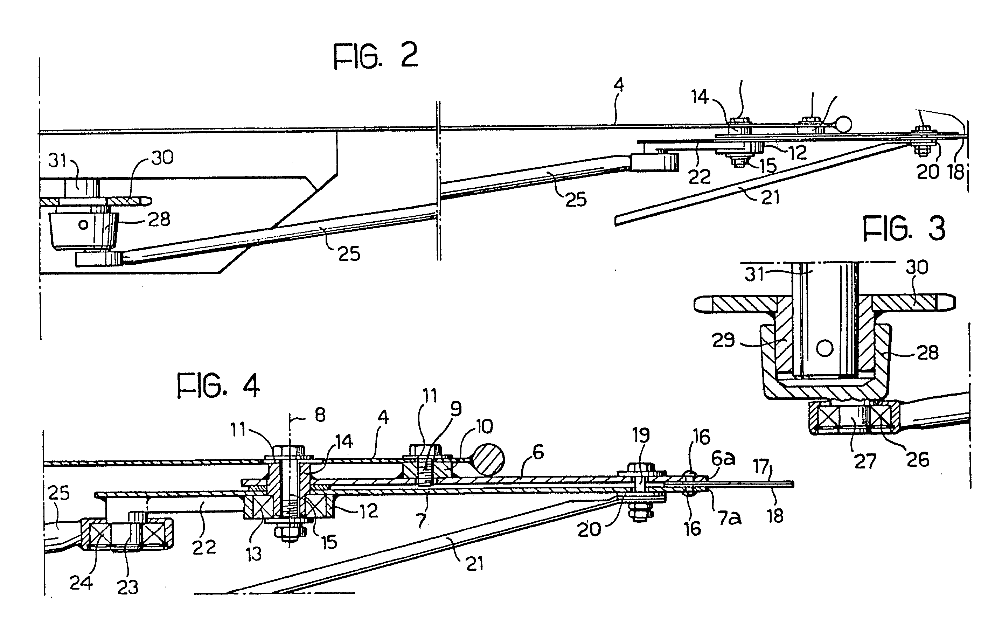

As illustrated in Figures 2 and 4, the plate 6 is fixed to the wall 4, while the plate 7 is articulated to the wall 4 about a transverse horizontal axis 8.

The plates 6, 7 also have front edges 6a, 7a in the form of arcs of circles having the same radius and centres which are coincident with the axis 8.

The plate 6 is fixed to the wall 4 by screws 9 (one of which is visible in Figure 4) which engage in nuts 10 welded to the surface of the plate 6 facing the wall 4.

The wall 4 has a slot 11 in correspondence with each screw 9, to allow adjustment of the position of the plate 6 relative to the wall 4.

On its surface facing in the opposite direction from the plate 6, the plate 7 has, in correspondence with the articulation axis 8, a tubular appendage 12 which is rotatable, with the interposition of a rolling bearing 13 (see Figure 4), on a tubular pin 14 which is welded to the fixed plate 6 and is fixed to the wall 4 by a bolt 15.

The wall 4 also has a slot 11 in correspondence with the bolt 15, to permit the adjustment of the position of the plate 6 relative to the wall 4.

Along the front edges 6a, 7a of the two plates 6, 7 trapezoidal blade segments 17, 18 are fixed in sliding contact with each other by means of rivets 16.

The two plates 6, 7 are provided with a bolt 19 which holds them together, to maintain the contact between the blade segments 17, 18. On the bolt 19 is mounted a washer 20 of wear-resistant material which is slidable on the surface of the plate 7 during the operation of the device.

The bolt 19 also serves to fix a protective structure 21 formed by a sheet metal wall which extends rearwardly to cover the articulation axis 8 of the plate 7.

This articulation axis is disposed at one end of a stiffening rib 22 which is welded to the plate 7. At the opposite end of this rib 22 is disposed a pin 23 on which one end of a connecting rod 25 is mounted with the interposition of a rolling bearing 24, the opposite end of this rod being mounted on a pin 27 with the interposition of a rolling bearing 26.

The pin 27 is disposed eccentrically on a cap-member 28 mounted on a hub 29 which is welded to a gear wheel 30.

The hub 29 is fixed to a shaft, indicated 31 in Figure 3, which supports the lower roller of the conditioning device with which the machine illustrated in the drawings is provided. The gear wheel 30 is driven by a chain transmission 32 (see Figure 1) which drives the rotation of the lower roller of the conditioning device. The chain transmission is of a type known *per se* and does not fall within the scope of the present invention.

Adjustment of the connection between the pins 27, 23 by the connecting rod 23 is permitted by the ability to adjust the position of the plate 6 relative to the wall 4.

Also fixed to the wall 4 is a small plate 33 which is intended to prevent blades of grass from lodging between the wall 4 and the blade segment 17 at the upper end of the front edge 6a of the plate 6.

During the operation of a mowing-conditioning machine, the movement of the lower roller of the conditioning device of the machine drives the rotation of the eccentric pin 27, which thus acts as the end of a crank, and the movement of the connecting rod 25. This movement causes rotation of the plate 7 relative to the plate 6 about the articulation axis 8.

The movable plate 7 is, of course, provided with a slot 7b (see Figure 1) in correspondence with the bolt 19, to allow relative movement between the two plates.

The two series of blade segments 17, 18 thus divide the crop being mown by the machine, the roots of which lie in the ground between the two side walls 4, from the crop which has yet to be mown and is situated beside and beyond the machine.

It suffices for the cutting device 5 to be mounted only on one side of the machine, although the provision of a device of the type described above on both sides is not excluded.

The cutting device according to the invention is particularly simple and light. It does not require the use of means for guiding the movement of the blade segments, unlike the devices of known type, and furthermore, allows the use of a mechanical transmission for driving the movement of the plate 7 which is simple and formed from a smaller number of parts.

In particular, intermediate transmission elements for the connection between the connecting rod and the plate 7 are not necessary. The rod 25 is, in fact, articulated directly to the plate.

**Claims**

1. Cutting device with vertical blades for an agricultural machine, particularly for mowing-conditioning machines, characterised in that it includes:

— a first vertical plate (6) fixed at the front and to one side (4) of the agricultural machine, and having a front edge (6a) in the form of an arc of a circle;

— a first series of blade segments (18) fixed along the front edge (6a) of the plate (6);

— a second vertical plate (7) articulated to the side (4) of the agricultural machine alongside the first plate (6) about a horizontal axis (8) which is perpendicular to said plates (6, 7) and passes through the centre of the circle of said arc (6a), the second plate (7) having a front edge (7a) which is also in the form of an arc of a circle having its centre and radius coincident with those of the arc of the first plate (6);

— a second series of blade segments (17) fixed along the front edge (7a) of the second plate (7); and

— mechanical transmission means for oscillating the second plate (7) relative to the first plate (6) about the articulation axis (8), said means comprising a crank including an eccentric pin (27) carried by a cap-shaped body (28) fixed to one end of a rotating shaft of the agricultural machine, and a connection rod (25) which is articulated at its ends respectively with interposition of rolling bearings (24, 26) to the crank (27, 28) and to the second plate (7), said second plate (7) being provided with a stiffening rib (22) extending between said articulation axis (8) of the second plate (7) relative to the first plate (6) and the articulation axis of the second plate (7) to said connecting rod (25).

2. Cutting device according to Claim 1, characterised in that the device further includes means (19) for maintaining the blade segments (17, 18) of the first plate (6) and the second plate (7) in contact with each other.

3. Cutting device according to Claim 2, characterised in that the means for maintaining the blade segments (17, 18) of the first plate (6) and the second plate (7) in contact with each other include a bolt (19), which is adapted to clamp the two plates (6, 7) in contact with each other and is engaged in a slot (7b), in the second plate (7).

4. Cutting device according to Claim 3, characterised in that the bolt (19) is provided with a washer (20) of wear-resistant material which is in sliding contact with the second plate (7).

5. Cutting device according to Claim 1, characterised in that the second plate (7) is articulated on a tubular pin (14), which is welded to the said first plate (6), with the interposition of a roller bearing.

6. Cutting device according to Claim 5, characterised in that the first plate (6) is provided with at least three screws (9) fixing it to the side (4) of the machine, said screws (9) being engaged in nuts (10), which are welded to the first plate (6), and being inserted in corresponding slots (11), which are formed in the side of the machine, to allow adjustment of the position of this latter relative to the side (4) of the machine.

7. Cutting device according to Claim 1, characterised in that the device further includes a protective plate (21) which is carried by the first plate (6) and is adapted to cover the articulation axis (8) of the second plate (7).

8. Cutting device according to Claim 1, characterised in that it includes a deflector plate (33) which is fixed to the side (4) of the machine and is disposed in correspondence with the blade segment (18) situated at the upper end of the series of blade segments fixed along the front edge (6a) of the first plate (6).

## Patentansprüche

1. Schneidevorrichtung mit vertikalen Blättern für landwirtschaftliche Maschinen, insbesondere Mäh- und Konditioniermaschinen, dadurch gekennzeichnet, daß sie folgende Bauteile aufweist:

eine erste vertikale Platte (6), die an der Front an einer Seite der Maschine befestigt ist und eine kreisbogenförmige vordere Kante (6a) besitzt;

eine erste Serie von Messersegmenten (18), die entlang der vorderen Kante (6a) der Platte (6) befestigt sind;

eine zweite vertikale Platte (7), die neben der ersten Platte (6) um eine horizontale, zu den Platten (6, 7) lotrechte Achse (8), schwenkbar an der Seite (4) der landwirtschaftlichen Maschine angeordnet ist, wobei die Achse (8) im Zentrum des Kreisbogens (6a) liegt und die zweite Platte (7) eine vordere Kante (7a) aufweist, die ebenfalls kreisbogenförmig ausgebildet ist, und ihr Krümmungsmittelpunkt und Radius mit denen der ersten Platte (6) übereinstimmen;

eine zweite Serie von Messersegmenten (1), die entlang der vorderen Kante (7a) der zweiten Platte (7) angeordnet sind;

mechanische Antriebsmittel zur schwingenden Bewegung um die Anlenkachse (8) der zweiten Platte (7) relativ zur ersten Platte (6), wobei die Antriebsmittel aus einer Kurbel mit einem excentrischen Zapfen (27), der von einem hutförmigen Körper (28) getragen wird, der an einem Ende einer Drehwelle der landwirtschaftlichen Maschine befestigt ist und einer Verbindungsstange (25) bestehen, die mit ihrem einen Ende, bzw. unter Zwischenschaltung von Wälzlagern (24, 26), mit der Kurbel (27, 28) und der zweiten Platte (7) verbunden ist, wobei die zweite Platte (7) mit einer Versteifungsrippe (22) versehen ist, die sich zwischen der Schwenkachse (8) der zweiten Platte (7) relativ zur ersten Platte (6) und der Schwenkachse (23) der zweiten Platte (7) gegenüber der Verbindungsstange (25) erstreckt.

2. Vorrichtung nach Anspruch 1 dadurch gekennzeichnet, daß die Vorrichtung weiterhin Mittel (19) aufweist, um die Messersegmente (17, 18) der ersten Platte (6) und der zweiten Platte (7) in Anlage an einander zu halten.

3. Vorrichtung nach Anspruch 2 dadurch gekennzeichnet, daß die Mittel, um die Messersegmente in Anlage an einander zu halten, einen Bolzen (19) aufweisen, der die beiden Platten (6, 7) an einander klemmt und in einen Schlitz (7b) in der zweiten Platte (7) eingreift.

4. Vorrichtung nach Anspruch 3 dadurch gekennzeichnet, daß der Bolzen (13) mit einer Scheibe (20) aus verschleißfestem Material versehen ist, die auf der zweiten Platte (7) gleitet.

5. Vorrichtung nach Anspruch 1 dadurch gekennzeichnet, daß die zweite Platte (7) auf einem Rohrzapfen (14) unter Zwischenschaltung eines Wälzlagers schwenkbar ist, der an der ersten Platte (6) angeschweißt ist.

6. Vorrichtung nach Anspruch 5 dadurch gekennzeichnet, daß die erste Platte (6) mit mindestens drei Schrauben (9) versehen ist, die sie an der Seite (4) der Maschine festhalten, wobei die Schrauben (9) in Muttern (10) eingreifen, die an der ersten Platte (6) angeschweißt sind und in entsprechende Schlitze (11) eingelassen sind, die in der Seite der Maschine ausgebildet sind, um eine Einstellung der letzteren relativ zur Seite (4) der Maschine zu ermöglichen.

7. Vorrichtung nach Anspruch 1 dadurch gekennzeichnet, daß die Vorrichtung fernerhin eine Schutzplatte (21) aufweist, die von der ersten Platte (6) getragen wird und die Schwenkachse (8) der zweiten Platte (7) abdeckt.

8. Vorrichtung nach Anspruch 1, dadurch gekennzeichnet, daß sie eine Abweiserplatte (33) aufweist, die an der Seite (4) der Maschine befestigt und am oberen Ende der Serie der an der Vorderkante der ersten Platte (6) befestigten Messersegmente, angeordnet ist.

## Revendications

1. Dispositif de coupe à couteaux verticaux pour une machine agricole en particulier, pour faucheuses-conditionneuses, caractérisé en ce qu'il comprend une première plaque verticale (6) qui est fixée à l'avant et à un côté (4) de la machine agricole et possède un bord avant (6a) ayant la forme d'un arc de cercle; une première série de segments de couteaux (18) fixés le long du bord avant (6a), de la plaque 6; une deuxième plaque verticale (7) articulée sur le côté (4) de la machine agricole, le long de la première plaque (6), autour d'un axe horizontal (8) qui est perpendiculaire auxdites plaques (6, 7) et passe par le centre du cercle dudit arc (6a), la deuxième plaque (7) ayant un bord avant (7a) qui est également en forme d'un arc de cercle ayant son centre et son rayon en coïncidence avec ceux de l'arc de la première plaque (6); une deuxième série de segments de couteaux (17) fixés le long du bord avant (7a) de la deuxième plaque (7); et des moyens de transmission mécaniques servant à faire osciller la deuxième plaque (7) par rapport à la première plaque (6) autour de l'axe d'articulation (8), lesdits moyens comprenant une manivelle comportant un tourillon excentré (27) porté par un corps (28) en forme de chapeau fixé à une extrémité d'un arbre en rotation de la machine agricole, et une bielle (25) qui est articulée à ses extrémités, respectivement avec interposition de roulements à billes (24, 26) à la manivelle (27, 28) et à la deuxième plaque (7), la deuxième plaque (7) étant munie d'une nervure de raidissement (22) qui s'étend entre ledit axe d'articulation (8) de la deuxième plaque (7) sur la première plaque (6) et l'axe d'articulation de la deuxième plaque (7) sur ladite bielle (25).

2. Dispositif de coupe selon la revendication 1, caractérisé en ce que le dispositif comprend en outre des moyens (19) servant à maintenir les segments de couteaux (17, 18) de la première plaque (6) et de la deuxième plaque (7) en contact entre eux.

3. Dispositif de coupe selon la revendication 2, caractérisé en ce que les moyens servant à maintenir les segments de couteaux (17, 18) de la première plaque (6) et de la deuxième plaque (7) en contact entre eux comprennent un boulon (19) qui est adapté pour serrer les deux plaques (6, 7) en contact entre elles et qui est engagé dans une fente (7b) de la deuxième plaque (7).

4. Dispositif de coupe selon la revendication 3, caractérisé en ce que le boulon (19) est muni d'une rondelle (20) en matière résistante à l'usure qui est en contact de glissement avec la deuxième plaque (7).

5. Dispositif de coupe selon la revendication 1, caractérisé en ce que la deuxième plaque (7) est articulée sur un axe tubulaire (14) qui est soudé à ladite première plaque (6), avec l'interposition d'un roulement à billes.

6. Dispositif de coupe selon la revendication 5, caractérisé en ce que la première plaque (6) est munie d'au moins trois vis (9) qui la fixent au côté (4) de la machine, lesdites vis (9) étant engagées dans des écrous (10) qui sont soudés à la première plaque (6) et étant insérées dans des fentes correspondantes (11) qui sont formées sur le côté de la machine, pour permettre le réglage de la position de cette plaque par rapport au côté (4) de la machine.

7. Dispositif de coupe selon la revendication 1, caractérisé en ce que le dispositif comprend en outre une plaque de protection (21) qui est portée par la première plaque (6) et est adaptée pour recouvrir l'axe d'articulation (8) de la deuxième plaque (7).

8. Dispositif de coupe selon la revendication 1, caractérisé en ce q'il comprend une plaque déflectrice (33) qui est fixée au côté (4) de la machine et est disposée au niveau du segment de couteaux (18) sité à l'extrémité supérieure de la série de segments de couteaux fixés le long du bord avant (6a) de la première plaque (6).

# FIG. 1

0 042 823

FIG. 2

FIG. 3

FIG. 4